Europäisches Patentamt

European Patent Office

Office européen des brevets

(11) Publication number: **0 137 596**
**B1**

## EUROPEAN PATENT SPECIFICATION

(45) Date of publication of patent specification: **09.09.87**

(51) Int. Cl.⁴: **F 16 H 57/02**

(21) Application number: **84304825.7**

(22) Date of filing: **16.07.84**

(54) Automatic transmission with venting.

(30) Priority: **15.08.83 US 523271**

(43) Date of publication of application:
**17.04.85 Bulletin 85/16**

(45) Publication of the grant of the patent:
**09.09.87 Bulletin 87/37**

(84) Designated Contracting States:
**DE FR GB IT**

(56) References cited:
**DE-C- 376 980**
**DE-C- 442 069**
**US-A-2 592 380**
**US-A-3 260 130**

(73) Proprietor: **GENERAL MOTORS CORPORATION**
**General Motors Building 3044 West Grand**
**Boulevard**
**Detroit Michigan 48202 (US)**

(72) Inventor: **Maurer, Jerome David**
**9002 Norris Road**
**Dewitt Michigan 48820 (US)**

(74) Representative: **Breakwell, John Neil Bower**
**et al**
**GM Patent Section Vauxhall Motors Limited**
**Luton Office (F6) P.O. Box No. 3 Kimpton Road**
**Luton Bedfordshire LU2 OSY (GB)**

Courier Press, Leamington Spa, England.

**Description**

This invention relates to an automatic transmission with venting as specified in the preamble of claim 1, for example as disclosed in US—A—3 260 130.

The invention is concerned with an automatic transmission of this type having improved provision for reducing leakage of hydraulic fluid from the transmission housing during transmission operation, with balancing of the flow rates of air into and out of the transmission housing.

To this end an automatic transmission in accordance with the present invention is characterised by the features specified in the characterising portion of claim 1.

The controlled sub-atmospheric pressure thereby maintained within the automatic transmission housing during operation can reduce or even eliminate leakage of hydraulic fluid from the transmission housing during transmission operation.

In an automatic transmission in accordance with the present invention, the one-way valve means limits back flow, and the vacuum regulator means limits the maximum vacuum level in the transmission housing.

The transmission fill tube may have a filter and restriction disposed therein for the said purpose of balancing the flow rates of air into and out of the transmission housing.

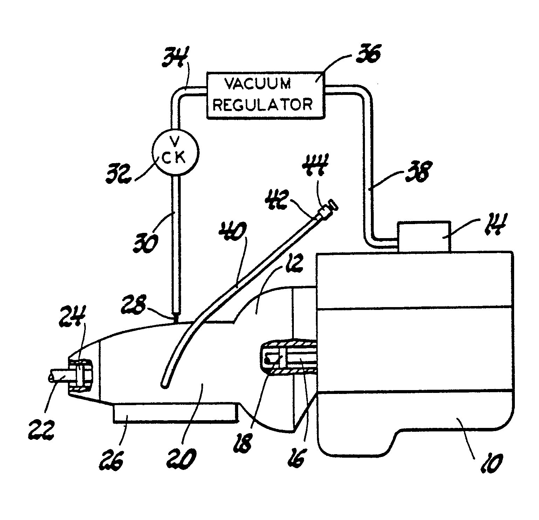

The single Figure of the drawing is a diagrammatic representation of a vehicular power train including an engine and an automatic transmission in accordance with the present invention.

With reference now to the drawing, there is shown an internal combustion engine 10 and a power transmission 12 which in conjunction form a vehicle power train. The engine 10 has a vacuum source 14 such as an intake manifold in the case of a spark-ignition engine or a vacuum pump in the case of a diesel engine. The transmission 12 is an automatic transmission having an input shaft 16 which is surrounded by a fluid seal 18 adapted to prevent fluid communication between the interior of the transmission housing, designated 20, and the atmosphere. The transmission 12 also has an output shaft 22 which is surrounded by a fluid seal 24 also adapted to prevent fluid communication between the interior of the transmission housing 20 and the atmosphere. There are other numerous sealed surfaces on the transmission housing 20 such as the seal between the bottom pan (oil pan, or sump) 26 and the main portion of the transmission housing.

The transmission housing 20 has a vent tube 28 which, in conventional transmissions, is permitted to vent the interior of the transmission housing 20 to atmosphere. In conformity with the present invention, the vent tube 28 is connected by way of a passage 30 to a check valve 32. The check valve 32 is connected by way of a passage 34 to a conventional vacuum regulator 36, which in turn is connected to the vacuum source 14 by way of a passage 38.

The check valve 32 is a conventional valve member, and is operable to prevent fluid flow from the vacuum source 14 or vacuum regulator 36 to the interior of the transmission housing 20. The vacuum regulator 36 is operable to limit the maximum vacuum which can be attained in the passage 34, and therefore in the interior of the transmission housing 20.

As is well known, the engine intake manifold can have vacuum levels in excess of 67.7 kPa (20 in. Hg). This vacuum level is higher than that which is necessary to vent the interior of the transmission housing 20. Accordingly, the vacuum regulator 36 can limit the maximum vacuum in the interior of the transmission housing to a level of 40.6 kPa (12 in. Hg), for example. Since the pressure level within the transmission housing 20 is less than atmospheric, it would be impossible for transmission hydraulic transmission fluid to flow past any of the sealing surfaces, such that leakage from the transmission during normal vehicle operation will be prevented.

The transmission 12 also has what is commonly termed a fill tube 40. The fill tube 40 is the housing for an ullage rod which is useful in measuring the amount of hydraulic fluid disposed within the transmission housing 20. Normally the upper end 42 of the fill tube 40 is only loosely capped with the end of the ullage rod. With the present invention, it is preferable to provide a cap 44 and associated filter for closing the end of the fill tube 40. The filter provides a flow restriction which, in conjunction with the check valve 32, is effective to balance the flow rates into and out of the transmission housing 20 such that the interior vacuum level can be maintained at (limited to) a desired value.

The most important advantage of an automatic transmission in accordance with the present invention is the reduction in hydraulic fluid leakage from the transmission housing during vehicle operation. As is well known, the sealing surfaces at the seals 18 and 24 can wear during operation, and thereby normally permit small amounts of leakage. With an automatic transmission in accordance with the present invention the leakage cannot occur during vehicle operation, and when the vehicle is not operating the fluid level within the transmission is not high enough to permit the hydraulic fluid to contact the seals 18 and 24.

**Claims**

1. An automatic transmission for use with an internal combustion engine (10) having a vacuum source (14), in which a transmission housing (20) is provided with a vent (28), a passage (30, 34, 38) connects the transmission vent (28) to the vacuum source (14), and one-way valve means (32) is connected in the passage (30, 34, 38) for preventing fluid flow from the vacuum source (14) to the transmission vent (28), characterised in that vacuum regulator means (36) is connected in the passage (30, 34, 38) between the vacuum source (14) and the one-way valve means (32) for limiting the maximum vacuum in the transmission housing (20), and a fill tube (40) on the transmission housing (20) is provided with restrictor means (44) providing a flow restriction effective to balance the flow rates of air into and out of the transmission housing (20), whereby the interior of the transmission housing (20) is maintained at a pressure less than atmospheric, as limited by the vacuum regulator means, when the engine (10) is operating and the vacuum source (14) is functioning.

2. An automatic transmission according to claim 1, characterised in that the restrictor means of the fill tube (40) on the transmission housing (20) comprises filter means effective to provide a flow restriction.

3. An automatic transmission according to claim 1, characterised in that the restrictor means (44) of the fill tube (40) on the transmission housing (20) includes filter means and is effective to provide a vacuum-limiting function.

**Patentansprüche**

1. Automatisches Getriebe zur Verwendung mit einer Brennkraftmaschine (10), die eine Vakuumquelle (14) aufweist, in welchem ein Getriebegehäuse (20) mit einer Öffnung (28) versehen ist, in welchem eine Leitung (30, 34, 38) die Getriebeöffnung (28) mit der Vakuumquelle (14) verbindet und in welchem eine Einwegeventileinrichtung (32) in der Leitung (30, 34, 38) eingebaut ist, um Fluidstrom von der Vakuumquelle (14) zur Getriebeöffnung (28) zu verhindern, dadurch gekennzeichnet, daß eine Vakuumsteuereinrichtung (36) in die Leitung (30, 34, 38) zwischen die Vakuumquelle (14) und die Einwegeventileinrichtung (32) zur Begrenzung des maximalen Vakuums im Getriebegehäuse (20) eingebaut ist, und daß ein Einfüllrohr (40) am Getriebegehäuse (20) mit Begrenzungseinrichtungen (44) vorgesehen ist, welche eine Strömungsbegrennzung schaffen, die die Strömungsrate von in das Getriebegehäuse (20) hinein- und aus diesem herausströmender Luft ausgleichen, wodurch das Innere des Getriebegehäuses (20) bei eines Druck gehalten wird, der niedriger als der Atmosphärendruck ist, wobei der Druck durch die Vakuumsteuereinrichtung begrenzt wird, wenn die Maschine (10) arbeitet und die Vakuumquelle (14) funktioniert.

2. Automatisches Getriebe nach Anspruch 1, dadurch gekennzeichnet, daß die Begrenzungseinrichtung des Einfüllrohrs (40) am Getriebegehäuse (20) Filtereinrichtungen umfaßt, die die Schaffung einer Strömungsbegrenzung bewirken.

3. Automatische Getriebe nach Anspruch 1, dadurch gekennzeichnet, daß die Begrenzungseinrichtung (44) des Einfüllrohrs (40) am Getriebegehäuse (20) Filtereinrichtungen unfaßt und die Schaffung einer vakuumbegrenzenden Funktion bewirkt.

**Revendications**

1. Transmission automatique destinée à être utilisée avec un moteur à combustion interne (10) présentant une source de vide (14), du type dans lequel un carter de transmission (20) présente une mise à l'air (28), un passage (30, 34, 38) relie la mise à l'air de transmission (26) à la source de vide (14) et un clapet antiretour (32) est monté dans le passage (30, 34, 38) afin d'empêcher un écoulement de fluides de cette source de vide (14) vers cette mise à l'air de transmission (28), caractérisé en ce qu'un régulateur de vide (36) est monté dans le passage (30, 34, 38) entre la source de vide (14) et le clapet antiretour (32) afin de limiter le vide maximal dans le carter de transmission (20), tandis qu'un tube de remplissage (40) situé sur ce carter de transmission (20) est muni d'un étranglement (44) fournissant une restriction de débit servant à équilibrer les débits d'air entrant dans le carter de transmission (20) et en sortant, de sorte que l'intérieur de ce carter de transmission (20) est maintenu à une pression inférieure à la pression atmosphérique, en étant limitée par le régulateur de vide, lorsque le moteur (10) tourne et que la source de vide (14) fonctionne.

2. Transmission automatique selon la revendication 1, caractérisé en ce que l'étranglement du tube de remplissage (40) du carter de transmission (20) comprend un filtre servant à fournir une restriction de débit.

3. Transmission automatique selon la revendication 1, caractérisé en ce que l'étranglement (44) du tube de remplissage (40) du carter de transmission (20) comprend un filtre et sert à remplir une fonction de limitation de vide.